# EUROPÄISCHE PATENTSCHRIFT

(11) **EP 1 806 636 B1**
(45) Veröffentlichungstag und Bekanntmachung des Hinweises auf die Patenterteilung: **13.10.2010**
(21) Anmeldenummer: 06015324.4
(22) Anmeldetag: 24.07.2006
(51) Int. Cl.: G05B 19/042, G05B 23/02, G01M 17/00, G06F 17/50

(54) **HiL-System und -Verfahren zum Testen von Steuergeräten eines Fahrzeugsteuersystems**
HiL system and method for testing ECU (electronic control unit) of a car control system
Système et procédé HiL pour le test d'appareils de commande d'un système de commande de voiture

(30) Priorität: 07.01.2006 DE 102006000943
(43) Veröffentlichungstag der Anmeldung: 11.07.2007
(73) Patentinhaber: Deutsche Telekom AG, 53113 Bonn (DE)
(72) Erfinder: Beier, Frank, Dipl.-Ing., 89231 Neu-Ulm (DE); Dobisch, Reinhold, Dipl.-ing., 89171 Illerkirchberg (DE); Noghero, Gerd, Dipl.-Ing., 89134 Blaustein (DE); Wohnhaas, Achim, Dr., 89182 Bernstadt (DE)
(74) Vertreter: Maiwald Patentanwalts GmbH

(56) Entgegenhaltungen:
- DE-A1- 10 303 489
- VERHOEFF L ET AL: "VEHIL: a full-scale test methodology for intelligent transport systems, vehicles and subsystems" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 369-375, XP010528965 ISBN: 0-7803-6363-9
- REHMANN J ET AL: "Distributed simulation: a proposed approach for air" DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, Bd. 1, 24. Oktober 2004 (2004-10-24), Seiten 5C1-51, XP010765000 ISBN: 0-7803-8539-X
- HANSELMANN H: "REAL-TIME SIMULATION REPLACES TEST DRIVES" TEST AND MEASUREMENT WORLD, REED BUSINESS INFORMATION, HIGHLANDS RANCH, CO, US, Bd. 16, Nr. 3, 15. Februar 1996 (1996-02-15), Seiten 35-36,38,40, XP000559454 ISSN: 0744-1657
- JAE-CHEON LEE ET AL: "Hardware-in-the loop simulator for ABS/TCS" CONTROL APPLICATIONS, 1999. PROCEEDINGS OF THE 1999 IEEE INTERNATIONAL CONFERENCE ON KOHALA COAST, HI, USA 22-27 AUG. 1999, PISCATAWAY, NJ, USA,IEEE, US, 22. August 1999 (1999-08-22), Seiten 652-657, XP010356461 ISBN: 0-7803-5446-X

## Beschreibung

Die Erfindung betrifft ein HiL-System und -Verfahren zum Testen von Steuergeräten eines Steuersystems, vorzugsweise eines Fahrzeugsteuersystems, mit einer echtzeitfähigen, über mindestens einen Zentralrechner bedienbaren Simulationseinrichtung zur Ausführung einer Systemsimulation, welche mit mehreren Testmodulen zum Anschluss je zugeordneter Steuergeräte des Steuersystems in Verbindung steht.

Das Einsatzgebiet der vorliegenden Erfindung bezieht sich vornehmlich auf Fahrzeugtechnik, Luft- und Raumfahrtechnik, Schiffstechnik oder dergleichen, in denen komplexe, elektronische Steuersysteme mit intelligenten Steuergeräten eingesetzt werden. Bei all diesen Anwendungen werden üblicherweise zu Testzwecken Systemsimulationen während der Entwicklung oder der Produktion genutzt. Dabei bietet ein HiL-System ("Hardware-In-The-Loop"-System) die Möglichkeit, reale Steuergeräte aus dem realen Gesamtsystem herausgelöst zu testen. Moderne Steuersysteme erwarten physikalisch sinnvolle Eingangsgrößen. Für einen allgemeinen Überprüfungsalgorithmus ist bei Steuersystemen der hier interessierenden Art ein statischer Ansatz nicht mehr praktikabel. Vielmehr müssen die Eingangsgrößen von einer Simulationsumgebung in Echtzeit zur Verfügung gestellt werden. Die Ausgangsgrößen des realen Steuersystems werden dann zurückgeführt und fließen in die Simulation ein.

Vor allem im Bereich der Fahrzeugtechnik werden durch die vorherrschend kurzen Modellwechselintervalle Zeitvorgaben für Neuentwicklungen oder Produktionszeitvorgaben entsprechend kürzer. Gleichzeitig wird die Software der Steuergeräte des Fahrzeugsteuersystems durch den technischen Fortschritt immer komplexer. Durch HiL-Simulationen können Steuergeräte und Software ohne den Einsatz von realen Steuersystemen oder Prototypen in einer virtuellen Umgebung umfassend getestet werden. Die dahinterstehende Idee ist, die realen Steuergeräte sowohl mit Echtzeit-Simulationsmodellen des gesamten Steuersystems - beispielsweise eines Bremssystems - als auch mit seinen mechanischen, elektronischen, hydraulischen und elektrischen Komponenten zu verbinden. Dadurch ist systematisches und vollständig automatisiertes Testen der Steuergeräte und des gesamten elektronischen Steuersystems möglich.

Aus dem allgemeinen Stand der Technik sind beispielsweise HiL-Prüfstände für Steuergeräte eines Bremssystems eines Fahrzeuges und dergleichen bekannt. Alle nötigen-Eingangssignale werden von einer Simulationseinrichtung, welche insbesondere das Fahrzeugmodell und den Fahrer simuliert, den Steuergeräten bereitgestellt. An die Simulationseinrichtung rückgeführte Größen sind insbesondere Signale an die Motorsteuerung oder die Bremsdrücke an den Bremsscheiben. Die zu testenden Steuergeräte sind an jeweils zugeordneten Testmodulen des HiL-Systems angeschlossen, welche entsprechende I/O-Schnittstellen aufweisen. Jedes Testmodul des bisher bekannten Standes der Technik enthält zudem eine Simulationseinrichtung zur Ausführung der Systemsimulation. Alle Testmodule werden über einen Zentralrechner verwaltet.

Darüber hinaus ist aus der Offenlegungsschrift DE 103 03 489 A1 ein Verfahren und eine Vorrichtung zum Testen von Software einer Steuereinheit eines Fahrzeugs bekannt. Das Verfahren sieht vor, dass durch ein Testsystem eine von der Steuereinheit steuerbare Regelstrecke wenigstens teilweise simuliert wird. Die Vorrichtung umfasst hierzu erste Hardware-Bausteine, zu denen über eine erste Verbindung Ausgangssignale der Steuereinheit übertragen werden, und zweite Hardware-Bausteine, deren Signale als Eingangssignale zur Steuereinheit über eine zweite Verbindung übertragen werden. Ferner umfasst die Vorrichtung Mittel, die die Ausgangssignale als erste Steuerwerte in der Software bereitstellen, und eine Kommunikationsschnittstelle, über welche die Ausgangssignale zusätzlich und in Echtzeit bezogen auf die Regelstrecke zum Testsystem übertragen werden.

Durch die immer komplexer werdenden Steuersysteme sind auch immer komplexer werdende Simulationsmodelle erforderlich, welche entsprechende Hardware-Anforderungen an den HiL-Prüfstand stellen. So stoßen selbst leistungsfähige Zentralrechner bei der Verwaltung vieler Testmodule mit je zugeordneten Steuergeräten eines komplexen Fahrzeugsteuersystems an ihre Leistungsgrenzen.

Es ist daher die Aufgabe der vorliegenden Erfindung, ein HiL-System und Verfahren zu schaffen, welches eine Simulation komplexer Steuersysteme mit einem möglichst einfachen, modularen Aufbau gewährleistet.

Die Aufgabe wird ausgehend von einem HiL-System gemäß dem Oberbegriff von Anspruch 1 in Verbindung mit dessen kennzeichnenden Merkmalen gelöst. Verfahrenstechnisch wird die Aufgabe durch Anspruch 9 gelöst. Ein die erfindungsgemäße Lösung mit einschließendes Computerprogrammprodukt oder Datenträger wird angegeben durch die Merkmale von Anspruch 11 bzw. 12.

Die Erfindung schließt die systemtechnische Lehre ein, dass eine Simulationseinfichtung zur Ausführung einer HiL-Simulation verteilt auf einer mit dem Zentralrechner verbundenen Zentraleinheit sowie mehreren hieran angekoppelten Moduleinheiten der Testmodule angeordnet ist, wobei der Teil der in der Zentraleinheit untergebrachten Simulationseinrichtung die eine steuergeräteübergreifende Abläufe betreffende Interaktion der Steuergeräte nachbildet, wogegen der Teil der in den Moduleinheiten untergebrachten Simulationseinrichtung die eine steuergeräteübergreifende Abläufe betreffende Interaktion der Steuergeräte nachbildet, wogegen der Teil der in den Moduleinheiten untergebrachten Simulationseinrichtung steuergerätespezifische Abläufe für die hieran angeschlossenen Steuergeräte nachbildet.

Der Vorteil der erfindungsgemäßen Lösung resultiert vornehmlich aus der hier speziellen Umsetzung einer auf mehrere Systemeinheiten verteilten Intelligenz. Durch die spezielle Zentraleinheit wird Rechenkapazität zur Ausführung der Systemsimulation bereitgestellt, welche die einzelnen Testmodule rechenkapazitätsmäßig entlastet. Es werden in den Moduleinheiten der Testmodule sinnvollerweise vornehmlich steuergerätespezifische Abläufe für die direkt hieran angeschlossenen Steuergeräte nachgebildet. Alle steuergeräteübergreifenden Abläufe werden dagegen vornehmlich in der Zentraleinheit simuliert. Dieses spezielle Konzept der verteilten Intelligenz gestattet einen modularen Aufbau des HiL-Systems. Alle Testmodule können weitestgehend einheitlich aufgebaut sein; die u.a. I/O- und CAN-Schnittstellen sind steuergerätespezifisch auszubilden.

Zur weiteren Leistungssteigerung des erfindungsgemäßen HiL-Systems wird vorgeschlagen, dass zumindest Teile der steuergerätespezifischen Abläufe der Simulation auch von den Moduleinheiten auf die Zentraleinheit verlagert werden. Die Voraussetzung hierfür kann in einfacher Weise softwaretechnisch geschaffen werden. Bei dieser Maßnahme wird vorrangig die Rechenkapazität in den Moduleinheiten genutzt, wobei eine Ergänzung durch noch ungenutzte Rechenkapazitäten seitens der Zentraleinheit erfolgen kann.

Da sich erforderlichenfalls eine Erweiterung der Rechenkapazität der Zentraleinheit gegenüber der Rechenkapazität bestimmter Moduleinheiten - ohne Verletzung des modularen Konzepts - einfacher durchführen lässt, erweist sich diese Maßnahme zur Leistungssteigerung als recht vorteilhaft.

Vorzugsweise ist das in der Simulationseinrichtung integrierte Simulationsmodell in Teilmodelle gegliedert, die einerseits der Zentraleinheit und andererseits den Moduleinheiten zugeordnet sind. Bei der Konzeption des Simulationsmodells ist darauf zu achten, dass sinnvolle, die Rechenkapazität der Testmodule optimal ausnutzende Teilmodelle konzipiert werden. Die echtzeitvernetzten Teilmodelle des Simulationsmodells sollten hinsichtlich eines minimalen Datenaustausches optimiert sein. Diese Maßnahmen tragen zu einer maximalen Leistungsfähigkeit des HiL-Systems bei.

Zur echtzeitfähigen Vernetzung zwischen Zentraleinheit und den einzelnen Moduleinheiten eignen sich Kommunikationseinrichtungen, welche auf der Grundlage von LAN, WLAN, GPRS, UMTS, GSM oder BLUETOOTH-Standard ausgebildet sind. Auch andere drahtgebundene oder drahtlose Kommunikationseinrichtungen sind geeignet. Es ist jedoch auch denkbar, optische Kommunikationseinrichtungen - wie MOST-Standard oder Glasfaser-Kommunikationseinrichtungen und dergleichen zu verwenden.

Gemäß einer weiteren, die Erfindung verbessernden Maßnahme ist vorgesehen, dass dem Zentralrechner zur Bedienung der Simulationseinrichtung mindestens eine Speichereinheit zugeordnet ist, in welcher eine Bibliothek unterschiedlicher Simulationsmodelle enthalten ist, welche an die Simulationseinrichtung zur Ausführung übertragbar sind. Somit ist es möglich, das HiL-System flexibel an unterschiedliche Systemsimulationen anzupassen. Beispielsweise können mit einem einzigen HiL-System mehrere Varianten von Bremssystemen eines Fahrzeug getestet werden. Zu diesem Zwecke ist das jeweils geeignete Simulationsmodell in die Simulationseinrichtung zu laden, bevor die Simulation startet.

Neben der Bereitstellung geeigneter Simulationsmodelle kann der Simulationsrechner außerdem auch mit Mitteln zum Editieren von Einstellungen des in die Simulationseinrichtung geladenen Simulationsmodells ausgestattet sein. So ist es beispielsweise möglich, Simulationszeiten vorzugeben oder verschiedene Lastzustände und dergleichen über eine entsprechende Parametrierung des Simulationsmodells mittels Zentralrechner vorzugeben.

Vorteilhafterweise kann der Zentralrechner außerdem mit Mitteln zum Überwachen des Simulationsablaufs innerhalb der Simulationseinrichtung ausgerüstet sein. Hierdurch besteht die Möglichkeit, im Fehlerfall eine Korrektur von Eingangsparametern für die Simulation durchzuführen. Denn die in Folge der Simulation von den einzelnen Steuergeräten zurückgeführten Ausgangswerte lassen sich durch den Zentralrechner nach Fehlerzuständen auswerten. Ist ein Fehlerzustand erkannt, kann dieser durch eine entsprechende Korrektur von Eingangsparametern kompensiert werden. Durch diese Maßnahem erfolgt also ein Prüfen von Zuständen, die sich an dem zu testenden Steuergerät einstellen auf Plausibilität. Fehler im Simulationsmodell oder im angeschlossenen Steuergerät lassen sich weitergehend zu diagnostischen Zwecken auswerten.

Das mit dem erfindungsgemäßen HiL-System durchgeführte HiL-Verfahren lässt sich als Software realisieren, die in Form eines Comupterprogrammprodukts auf einem Datenträger hinterlegt werden kann. Die die Routine zur Systemsimulation verkörpernde Software lässt sich auf handelsüblichen Rechnern ausführen.

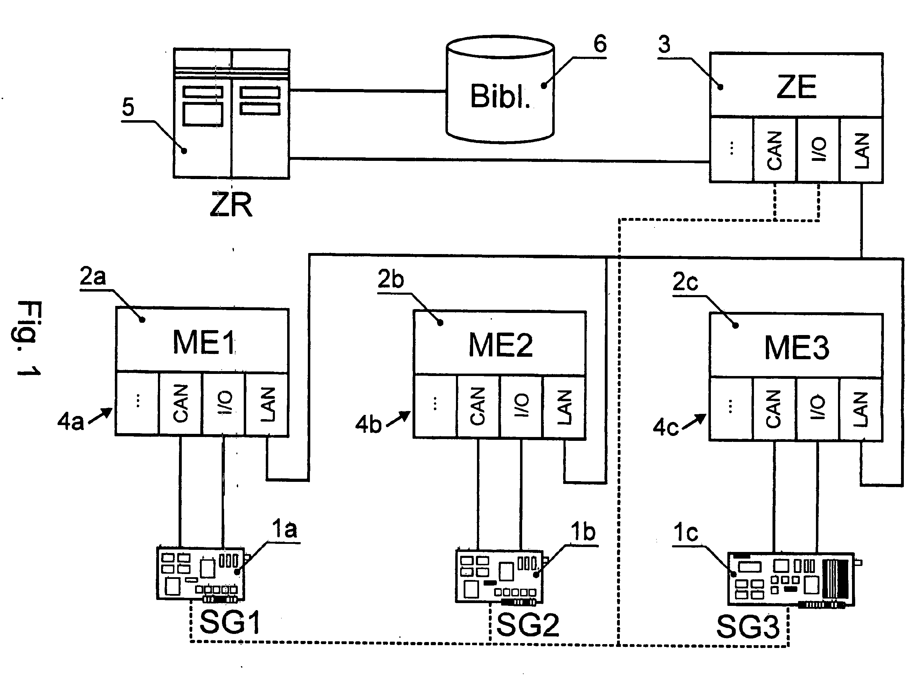

Weitere, die Erfindung verbessernden Maßnahmen werden nachstehend gemeinsam mit der Beschreibung eines bevorzugten Ausführungsbeispiels der Erfindung anhand einer einzigen Figur näher dargestellt.

Die Figur zeigt ein Blockschaltbild eines HiL-Systems für einzelne hieran angeschlossene Steuergeräte.

Gemäß Figur dient das hierin abgebildete HiL-System zum Testen von drei exemplarischen Steuergeräten 1a-1c eines Fahrzeugsteuersystems, hier einer Bremsanlage. Dabei ist das erste Steuergerät 1a ein linkes Bremsmodul, das zweite Steuergerät 1b ein rechtes Bremsmodul und das dritte Steuergerät 1c ein Anhängerbremsmodul eines Nutzfahrzeuges. Mit dem HiL-System werden die Steuergeräte 1a-1c per echtzeitfähiger Simulation getestet.

Zu diesem Zwecke sind die Steuergeräte 1a-1c an einem jeweils zugeordneten Testmodul 2a-2c angeschlossen. Der Anschluss erfolgt nach Maßgabe der Steuergeräte 1a-1c über einen CAN-Bus sowie einer I/O-Schnittstelle zur Übertragung von Sensorsignalen und dergleichen. Daneben sind die Steuergeräte 1a-1c auch nach Maßgabe ihrer realen Vernetzung (Strichlinie) angeschlossen.

Zur Simulationseinrichtung gehört weiterhin eine Zentraleinheit 3, die mit den Moduleinheiten 2a-2c über ein LAN echtzeitfähig vernetzt ist. Somit ist die Simulationseinrichtung erfindungsgemäß auf die Zentraleinheit 3 sowie den hieran angekoppelten Moduleinheiten 2a-2c verteilt angeordnet. Die Moduleinheiten 2a-2c sind in Testmodulen 4a-4c untergebracht, welche weiterhin auch die erforderlichen Schnittstellen, wie CAN, I/O, LAN, zur Kommunikation mit den Steuergeräten 1a-1c sowie untereinander enthalten. Der Teil der in der Zentraleinheit untergebrachten Simulationseinrichtung bildet die eine steuergeräteübergreifende Abläufe betreffende Interaktion der Steuergeräte 1a-1c nach. Im vorliegenden Beispiel der Ausführung der Steuergeräte 1a-1c als Bremsmodule eines elektronischen Bremssystems ist beispielsweise die Synchronisation der Aktion der Bremsmodule als ein solcher steuergeräteübergreifender Ablauf anzusehen. Dagegen bildet der in den Moduleinheiten 2a-2c untergebrachte Teil der Simulationseinrichtung steuergerätespezifische Abläufe für die hieran angeschlossenen Steuergeräte 1a-1c nach. Ein solcher steuergerätespezifischer Ablauf ist beispielsweise die ABS-Funktionalität (ABS=Antiblockiersystem) jedes Bremsmoduls.

Das in der verteilten Simulationseinrichtung integrierte Simulationsmodell ist in Teilmodelle gegliedert, die einerseits der Zentraleinheit 3 und andererseits den Moduleinheiten 2a-2c zugeordnet sind. Somit besteht bei Bedarf die Möglichkeit, zumindest Teile der steuergerätespezifischen Abläufe der Simulation auch von den Moduleinheiten 2a-2c auf die Zentraleinheit 3 zu verlagern, um erforderlichenfalls zentraleinheitseitige Leistungsreserven zu nutzen.

Die Zentraleinheit 3 der Simulationseinrichtung steht mit einem Zentralrechner 5 in Verbindung. Der Zentralrechner 5 dient insbesondere dem Editieren von Einstellungen des in der Simulationseinrichtung geladenen Simulationsmodells. Der Zentralrechner 5 steht weiterhin mit einer Speichereinheit 6 in Verbindung. Die Speichereinheit 6 bildet eine Bibliothek, welche unterschiedliche Simulationsmodelle vorhält, die an die Simulationseinrichtung zur Ausführung übertragbar sind. Der Zentralrechner 5 hat ferner die Aufgabe, den Simulationsablauf innerhalb der verteilten Simulationseinrichtung zu überwachen, um im Fehlerfall erforderlichenfalls eine Korrektur von Eingangsparametern für die Simulation und dergleichen durchzuführen.

Die Erfindung ist nicht beschränkt auf das vorstehend beschrieben bevorzugte Ausführungsbeispiel. Es sind vielmehr auch Abwandlungen hiervon denkbar, welche vom Schutzbereich der nachfolgenden Ansprüche umfasst sind. So ist die Erfindung nicht allein auf eine HiL-Simulation für ein Fahrzeugsystem beschränkt. Es können auch andere komplexe elektronische Steuersysteme von Luft- und Raumfahrzeugen, Wasserfahrzeugen und ähnlichem mit der erfindungsgemäßen Lösung durchgeführt werden.

### Bezugszeichenliste:

- 1: Steuergerät
- 2: Moduleinheit
- 3: Zentraleinheit
- 4: Testmodul
- 5: Zentralrechner
- 6: Speichereinheit

## Patentansprüche

1. HiL-System zum Testen von Steuergeräten (1a bis 1c) eines Fahrzeugsteuersystems, mit einer echtzeitfähigen, über mindestens einen Zentralrechner (5) bedienbaren Simulationseinrichtung zur Ausführung einer Systemsimulation, welche mit mehreren Testmodulen (4a bis 4c) zum Anschluss je zugeordneter Steuergeräte (1a bis 1c) des Steuersystems in Verbindung steht,
**dadurch gekennzeichnet, dass** die Simulationseinrichtung verteilt auf einer mit dem Zentralrechner (5) verbundenen Zentraleinheit (3) sowie mehreren hieran angekoppelten Moduleinheiten (2a bis 2c) der je zugeordneten Testmodule (4a bis 4c) angeordnet ist, wobei der Teil der in der Zentraleinheit (3) untergebrachten Simulationseinrichtung die eine steuergeräteübergreifende Abläufe betreffende Interaktion der Steuergeräte (1a bis 1c) nachbildet, wogegen der Teil der in den Moduleinheiten (2a bis 2c) untergebrachten Simulationseinrichtung steuergerätespezifische Abläufe für die hieran angeschlossenen Steuergeräte (1a bis 1c) nachbildet, wobei im Falle eines Leistungsengpasses Teile der steuergerätespezifischen Abläufe der Simulation auch von den Moduleinheiten (2a bis 2c) auf die Zentraleinheit (3) verlagerbar sind

2. HiL-System nach Anpruch 1,
**dadurch gekennzeichnet, dass** das in der Simulationseinrichtung integrierte Simulationsmodell in Teilmodelle gegliedert ist, die einerseits der Zentraleinheit (3) und andererseits den Moduleinheiten (2a bis 2c) zugeordnet sind.

3. HiL-System nach Anpruch 1,
**dadurch gekennzeichnet, dass** die echtzeitfähige Ankopplung zwischen der Zentraleinheit (3) und den Moduleinheiten (2a bis 2c) auf der Grundlage von LAN, WLAN, GPRS, UMTS, GSM oder BLUETOOTH-Standard ausgebildet ist.

4. HiL-System nach Anpruch 1,
**dadurch gekennzeichnet, dass** dem Zentralrechner (5) mindestens eine Speichereinheit (6) mit einer Bibliothek unterschiedlicher Simulationsmodelle zugeordnet ist, welche an die Simulationseinrichtung zur Ausführung übertragbar sind.

5. HiL-System nach Anpruch 1,
**dadurch gekennzeichnet, dass** der Zentralrechner (5) Mittel zum Editieren von Einstellungen des in die Simulationseinrichtung geladenen Simulationsmodells aufweist.

6. HiL-System nach Anpruch 1,
**dadurch gekennzeichnet, dass** der Zentralrechner (5) Mittel zum Überwachen des Simulationsablaufs innerhalb der Simulationseinrichtung aufweist, um im Fehlerfall eine Korrektur von Eingangsparametern für die Simulation durchzuführen.

7. HiL-System nach Anpruch 1,
**dadurch gekennzeichnet, dass** der Zentralrechner (5) Mittel zum Prüfen von an dem zu testenden Steuergerät (1a bis 1c) sich einstellenden zuständen aufweist.

8. HiL-Verfahren zum Betrieb eines HiL-Systems nach einem der vorstehenden Ansprüche,
**dadurch gekennzeichnet, dass** die Simulation auf einer mit dem Zentralrechner (5) verbundenen Zentraleinheit (3) sowie mehreren hieran angekoppelten Moduleinheiten (2a bis 2c) der je zugeordneten Testmodule (4a bis 4c) verteilt wird, wobei durch den Teil der in der Zentraleinheit (3) untergebrachten Simulation die Interaktion der Steuergeräte (1a bis 1c) im Sinne einer steuergeräteübergreifenden Abläufe nachgebildet wird, wogegen durch den Teil der in den Moduleinheiten (2a bis 2c) untergebrachten Simulation steuergerätespezifische Abläufe für die hieran angeschlossenen Steuergeräte (1a bis 1c) nachbildet werden, wobei ein Teil der steuergerätespezifischen Abläufe der Simulation im Falle eines Leistungsengpasses einer Moduleinheit (2a bis 2c) auf die Zentraleinheit (3) verlagert wird.

9. Computerprogrammprodukt das Anweisungen umfasst, die ein HiL-System nach einem der Ansprüche 1 bis 7 zur Ausführung der Schritte des Verfahrens gemäß Anspruch 8 veranlassen, wenn die Anweisungen in einem Prozessor des HiL-Systems geladen sind.

10. Datenträger mit einem Computerprogrammprodukt nach Anspruch 9.

## Claims

1. HiL system for testing control apparatuses (1a to 1c) of a vehicle control system, with a real time-capable simulation device, which can be operated via at least one central computer (5), for executing a system simulation, the simulation device being connected to a plurality of test modules (4a to 4c) for connecting respectively associated control apparatuses (1a to 1c) of the control system,
**characterized in that** the simulation device is arranged distributed on a central unit (3) connected to the central computer (5) and also a plurality of module units (2a to 2c) linked thereto of the respectively associated test modules (4a to 4c), the part of the simulation device that is accommodated in the central unit (3) reproducing an interaction of the control apparatuses (1a to 1c) that concerns control apparatus-encompassing sequences, whereas the part of the simulation device that is accommodated in the module units (2a to 2c) reproduces control apparatus-specific sequences for the control apparatuses (1a to 1c) connected thereto, wherein, in the case of a performance bottleneck, parts of the control apparatus-specific sequences of the simulation can also be relocated from the module units (2a to 2c) to the central unit (3).

2. HiL system according to claim 1, **characterized in that** the simulation model integrated in the simulation device is broken down into partial models which are associated on the one hand with the central unit (3) and on the other hand with the module units (2a to 2c).

3. HiL system according to claim 1, **characterized in that** the real time-capable link between the central unit (3) and the module units (2a to 2c) is embodied on the basis of the LAN, WLAN, GPRS, UMTS, GSM or BLUETOOTH standard.

4. HiL system according to claim 1, **characterized in that** at least one memory unit (6) with a library of different simulation models which can be transmitted to the simulation device for execution is associated with the central computer (5).

5. HiL system according to claim 1, **characterized in that** the central computer (5) has means for editing settings of the simulation model loaded into the simulation device.

6. HiL system according to claim 1, **characterized in that** the central computer (5) has means for monitoring the simulation sequence within the simulation device in order to carry out a correction of input parameters for the simulation in the event of an error.

7. HiL system according to claim 1, **characterized in that** the central computer (5) has means for checking states which arise in the control apparatus (1a to 1c) to be tested.

8. HiL method for operating an HiL system according to one of the preceding claims, **characterized in that** the simulation is distributed on a central unit (3) connected to the central computer (5) and also a plurality of module units (2a to 2c) linked thereto of the respectively associated test modules (4a to 4c), the interaction of the control apparatuses (1a to 1c) being reproduced by the part of the simulation that is accommodated in the central unit (3) in the sense of control apparatus-encompassing sequences, whereas control apparatus-specific sequences for the control apparatuses (1a to 1c) connected thereto are reproduced by the part of the simulation that is accommodated in the module units (2a to 2c), a part of the control apparatus-specific sequences of the simulation being relocated to the central unit (3) in the event of a performance bottleneck of a module unit (2a to 2c).

9. Computer program product comprising instructions which cause an HiL system according to one of claims 1 to 7 to execute the steps of the method according to claim 8 when the instructions are loaded in a processor of the HiL system.

10. Data carrier with a computer program product according to claim 9.

## Revendications

1. Système HiL destiné à tester des boîtiers de commande (1a à 1c) d'un système de commande de véhicule comprenant un dispositif de simulation capable de fonctionner en temps réel, actionnable par au moins un calculateur central (5) pour réaliser une simulation système, et relié à plusieurs modules de test (4a à 4c) pour la connexion de boîtiers de commande (1a à 1c) respectivement associés du système de commande,
**caractérisé en ce que** le dispositif de simulation est disposé de manière répartie sur une unité centrale (3) reliée au calculateur central (5) ainsi que sur plusieurs unités de modules (2a à 2c) qui y sont couplées des modules de test (4a à 4c) respectivement associés, la partie du dispositif de simulation logée dans l'unité centrale (3) imitant l'interaction des boîtiers de commande (1a à 1c) relative à des processus transfonctionnels de boîtiers de commande, tandis que la partie du dispositif de simulation logée dans les unités de modules (2a à 2c) imite les processus spécifiques aux boitiers de commande pour les boîtiers de commande (1a à 1c) connectés, des parties des processus de la simulation spécifiques aux boîtiers de commande pouvant être déplacés également des unités de modules (2a à 2c) sur l'unité centrale (3) dans le cas d'une insuffisance de puissance.

2. Système HiL selon la revendication 1, **caractérisé en ce que** le modèle de simulation intégré au dispositif de simulation est divisé en modèles partiels qui sont associés à l'unité centrale (3) d'une part et aux unités de modules (2a à 2c) d'autre part.

3. Système HiL selon la revendication 1, **caractérisé en ce que** le couplage réalisable en temps réel entre l'unité centrale (3) et les unités de modules (2a à 2c) est réalisé sur la base d'un standard LAN, WLAN, GPRS, UMTS, GSM ou BLUETOOTH.

4. Système HiL selon la revendication 1, **caractérisé en ce qu'**au moins une unité de mémoire (6) est associée au calculateur central (5) qui comprend une bibliothèque de modèles de simulation différents aptes à être transmis au dispositif de simulation pour exécution.

5. Système HiL selon la revendication 1, **caractérisé en ce que** le calculateur central (5) comprend des moyens pour éditer des paramètres du modèle de simulation téléchargé dans le dispositif de simulation.

6. Système HiL selon la revendication 1, **caractérisé en ce que** le calculateur central (5) comprend des moyens pour superviser le processus de simulation au sein du dispositif de simulation pour réaliser, en cas d'erreur, une correction de paramètres d'entrée pour la simulation.

7. Système HiL selon la revendication 1, **caractérisé en ce que** le calculateur central (5) comprend des moyens pour contrôler des états survenant sur le boîtier de commande (1a à 1c) à tester.

8. Procédé HiL destiné à faire fonctionner un système HiL selon l'une des revendications précédentes, **caractérisé en ce que** la simulation est répartie sur une unité centrale (3) reliée au calculateur central (5) ainsi que sur plusieurs unités de modules (2a à 2c) qui y sont couplées des modules de test (4a à 4c) respectivement associés, la partie de la simulation logée dans l'unité centrale (3) imitant l'interaction des boîtiers de commande (1a à 1c) au sens de processus transfonctionnels de boîtiers de commande, tandis que la partie de la simulation logée dans les unités de modules (2a à 2c) imite des processus spécifiques aux boîtiers de commande pour les boîtiers de commande (1a à 1c) connectés, une partie des processus spécifiques aux boîtiers de commande de la simulation étant déplacée sur l'unité centrale (3) dans le cas d'une insuffisance de puissance d'une unité de modules (2a à 2c).

9. Produit de programme d'ordinateur comprenant des instructions qui incitent un système HiL selon l'une des revendications 1 à 7 à exécuter les étapes du procédé selon la revendication 8, lorsque les instructions sont téléchargées dans un processeur du système HiL.

10. Support de données comportant un produit de programme d'ordinateur selon la revendication 9.
